# EUROPEAN PATENT SPECIFICATION

(11) **EP 1 591 289 B1**
(45) Date of publication and mention of the grant of the patent: **17.12.2008**
(21) Application number: 04101743.5
(22) Date of filing: 26.04.2004
(51) Int. Cl.: B60J 7/00, B60J 7/04

(54) **Open roof construction for a vehicle**
Öffnungsfähige Dachkonstruktion für ein Fahrzeug
Construction de toit ouvrant pour véhicule

(43) Date of publication of application: 02.11.2005
(73) Proprietor: Inalfa Roof Systems Group B.V., 5804 AH Venray (NL)
(72) Inventor: Manders, Peter Christiaan Leonardus Johannes, 5961 SM Horst (NL); Leenders, Jacobus, Hendricus, Christina, 5993 XS Maasbree (NL)
(74) Representative: Voncken, Bartholomeus Maria Ch.

(56) References cited:
- EP-A- 0 999 080
- DE-A- 4 012 635
- US-A- 3 078 122
- US-A- 4 333 680
- US-B2- 6 460 919
- PATENT ABSTRACTS OF JAPAN vol. 018, no. 496 (M-1674), 16 September 1994 (1994-09-16) -& JP 06 166327 A (AISIN SEIKI CO LTD; OTHERS: 01), 14 June 1994 (1994-06-14)

## Description

The invention relates to an open roof construction for a vehicle according to the preamble of claim 1. Such an open roof construction is disclosed in US-B-6.460.919, in which panel reinforcement members are permanently in engagement with roof-mounted guides.

With increasing dimensions of the roof opening it becomes increasingly difficult to maintain the structural integrity of an open roof construction (and thus to maintain the safety of the vehicle and its occupants), for example when collisions occur. For preventing a collapse of the stationary roof part strong and heavy constructional reinforcements would have to be used, which in a detrimental manner would increase the total weight of the vehicle.

The longitudinally extending reinforcement beams provided at the two opposite longitudinal edges of the roof opening basically are dimensioned such, that the shape of the roof opening is maintained when the movable panel is in its open position. Further, such reinforcement beams may provide a basis for mounting several constructional parts of the vehicle (whether or not belonging to the open roof construction) to the stationary roof part. Such reinforcement beams, however, are not meant to withstand the high loads generated during a collision, and especially during a side impact.

It is an object of the present invention to provide an improved open roof construction of the type referred to above.

Thus, in accordance with the present invention, an open roof construction as defined above is characterised in that only in the closed position of the movable panel the opposite ends of its panel reinforcement member are in a force-transmitting engagement with the two reinforcement beams.

When the movable panel is in its closed position the panel reinforcement member defines a force-transmitting path between the two reinforcement beams. As a result any force generated by a collision, and especially a side impact, is transmitted from one reinforcement beam to the opposite other reinforcement beam, without the occurrence of a collapse of the roof opening. Thus, according to the invention, the movable panel not only closes the roof opening in its closed position, but also provides a reinforcement thereof.

In a preferred embodiment of the open roof construction according to the present invention the force-transmitting engagement between the opposite ends of the panel reinforcement member and the two reinforcement beams is defined by a clearance fit.

Such a clearance fit means, that a certain amount of movement between the panel reinforcement member and reinforcement beams still is possible, notwithstanding the force-transmitting engagement therebetween. Said allowable movement however, is very small, and the force-transmission between these elements will occur shortly after such a movement has started. The clearance fit, however, makes it possible to bring the opposite ends of the panel reinforcement member without difficulty into the force-transmitting engagement with the two reinforcement beams, or to release said opposite ends of the panel reinforcement member from the two reinforcement beams. The engagaging operation occurs, when the movable panel is moved towards its closed position, whereas the disengagement operation will occur when the movable panel is moved towards its open position.

In another preferred embodiment, the force-transmitting engagement between the opposite ends of the panel reinforcement member and the two reinforcement beams allows the transmission between those parts of pressure forces as well as tensile forces.

When the vehicle is subjected to a side impact, generally pressure (compressive) forces will be applied to the stationary roof part striving to push the opposite longitudinal edges of the roof opening towards each other. Pressure forces generated between the reinforcement beams and the panel reinforcement member will counteract such compression. However, it is conceivable too, that the vehicle will be subjected to such forces that strive to move the longitudinal edges of the roof opening apart. In such a case, tensile forces generated between the panel reinforcement member and the reinforcement beams will prevent the reinforcement beams from moving apart.

One possible way to create such pressure forces as well as tensile forces is to provide the opposite ends of the panel reinforcement member and the reinforcement beams with cooperating parts, one of which comprises an undercut groove and the other of which comprises a mating projecting head. The exact shape of the undercut groove and mating projecting head may be determined depending on the loads to be transmitted, as well as the desired relative movement between the movable panel and stationary roof part during opening and closing the roof opening (for example, the undercut groove and head may taper in one direction, such that the relative fit therebetween increases when the movable panel moves towards its closed position).

Preferably, the undercut groove extends substantially in a direction perpendicularly to the movable panel. This means, that at least during the last part of the closing movement the movable panel moves substantially perpendicularly to itself. When moving from its closed position towards its open position, the movable panel will, in such a case, firstly move perpendicularly to itself, whereafter a movement in parallel to itself will occur (as is known per se in the state of the art with respect to open roof constructions of the type to which the invention relates).

Constructionally, it is preferred that the undercut groove is part of the reinforcement beams, whereas the mating projecting head is part of the opposite ends of the panel reinforcement member. As a result, when the movable panel is in its open position no parts project into and obstruct the roof opening.

Although the undercut groove may, in such a case, be provided directly in a reinforcement beam, according to another solution the undercut groove is provided in an extension piece connected to each reinforcement beam. This offers the possibility of amending a state of the art open roof construction in accordance with the teachings of the present invention.

When, in accordance with yet another preferred embodiment, the panel reinforcement member is positioned substantially midway the forward and rearward edges of the panel, the effectiveness of the reinforcement member is optimised.

Finally, in still another embodiment of the open roof construction according to the present invention, the reinforcement beams may be part of a frame surrounding the roof opening.

Hereinafter the invention will be elucidated referring to the drawing, in which embodiments of an open roof construction in accordance with the present invention are illustrated.
Figure 1 shows schematically in a perspective view an open roof construction according to the present invention;
figure 2 shows, on a larger scale, a detail II indicated in fig. 1, and
figure 3 shows another detail.

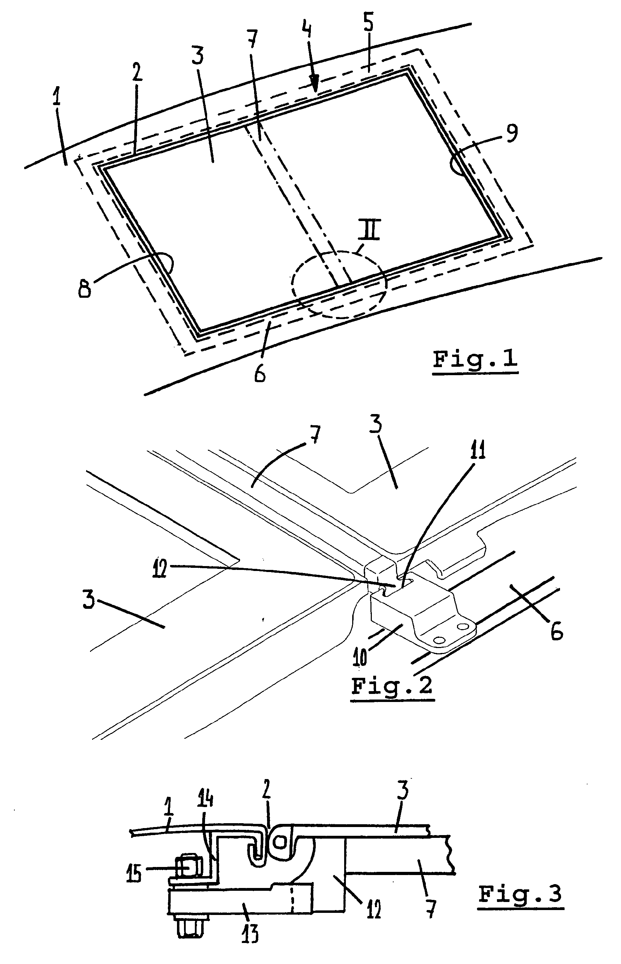

Firstly referring to figure 1, a stationary roof part 1 of a vehicle is illustrated partially, in which a roof opening 2 is provided. A movable panel 3 is movable between a closed position (illustrated) in which said roof opening 2 is closed, and an open position in which said roof opening 2 is opened.

The manner in which the movable panel 3 will move between its open and closed positions, and the means provided therefor (such as guiding means, drive means etcetera) is conventional, and does not need any further explanation within the scope of the present application.

In the embodiment of the open roof construction illustrated in figure 1 a frame 4 is provided which surrounds the roof opening 2. Among others, said frame 4 comprises two reinforcement beams 5 and 6 which extend in the longitudinal direction of the vehicle at the two opposite longitudinal edges of the roof opening 2. Hereinafter said reinforcement beams 5 and 6 will be indicated as longitudinally extending reinforcement beams.

The movable panel 3 is provided with a panel reinforcement member 7 which extends transversally between the longitudinal edges of the movable panel 2 at a position between the forward and rearward edges 8 and 9, respectively, of the movable panel 3. As will be explained later, in the closed position of the movable panel 3 as illustrated in figure 1, the opposite ends of the panel reinforcement member 7 are in a force-transmitting engagement with the two longitudinally extending reinforcement beams 5 and 6.

Figure 2 shows a detail of the open roof construction illustrated in fig. 1, i.e. the detail indicated by II in figure 1. It is noted, however, that in fig. 2 the roof opening 2 has been omitted.

As shown, the respective longitudinally extending reinforcement beam 6 is provided with an extension piece 10 connected thereto. An undercut groove 11 is defined in the extension piece 10. The panel reinforcement member 7 comprises a mating projecting head 12 which is shaped in such a a manner, that the force-transmitting engagement between said projecting head 12 and the undercut groove 11 of the extension piece 10 is defined by a clearance fit. That means, that the projecting head 12 can be moved into and out of the undercut groove 11 easily in a direction in parallel to said undercut groove 11, but that a relative movement between those parts in a direction perpendicularly to the undercut groove 11 only occurs in a very limited manner and almost immediately will result in a force-transmitting engagement between these parts.

The combination of undercut groove 11 and mating projecting head 12 allows the transmission therebetween of pressure forces as well as tensile forces.

The undercut groove 11 of the embodiment illustrated in fig. 2 extends substantially in a direction perpendicularly to the movable panel 3. That means, that the movable panel 3 will firstly move perpendicularly to itself when moving from the illustrated closed position towards an open position. In the illustrated closed position, however, a substantial movement of the panel 3 in a different direction will be prevented, whereas also any deformation of the longitudinally extending reinforcement beams 6 and 5 will be prevented, because these reinforcement beams 5 and 6 are interconnected by means of the panel reinforcement member 7.

Although in fig. 1 a frame 4 has been illustrated surrounding the roof opening 2, such a frame (or the reinforcement beams 5 and 6 thereof) are not necessary. Members corresponding to the extension piece 10 also may be attached to the stationary roof part 1 in a different manner. One example thereof has been illustrated in fig. 3. Figure 3 shows schematically a transverse section at a longitudinal edge of the roof opening 2. The movable panel 3 is in its closed position in which the projecting head 12 of the panel reinforcement member 7 is in engagement with a counter part 13 provided with an undercut groove (not illustrated) in a manner which corresponds with the manner as illustrated and explained in fig. 2. The counter part 13 is mounted to a bracket 14 attached to the stationary roof part 1 by means of a bolt 15. The bracket 14 (which then would correspond to a reinforcement beam) does not necessarily have to run along the entire longitudinal edge of the roof opening 2 but, instead, may extend only over a small distance.

Although in the illustrated embodiment the force-transmitting engagement between the panel reinforcement member 7 and the reinforcement beams 5, 6 or counter parts 13 is realised by means of the projecting head 12 and corresponding undercut groove 11, also other ways are conceivable for generating such a force-transmitting engagement. Thus, the engagement between the panel reinforcement member and reinforcement beams (whatever shape these have) also could occur indirectly through other constructive parts of the open roof construction.

The invention is not limited to the embodiments described before which may be varied widely within the scope of the invention as defined by the appending claims.

## Claims

1. Open roof construction for a vehicle, comprising a roof opening (2) provided in a stationary roof part (1) and a movable panel (3) which is movable between a closed position in which said roof opening is closed, and an open position in which said roof opening is opened, wherein at the two opposite longitudinal edges of said roof opening extending in the longitudinal direction of the vehicle the stationary roof part comprises respective longitudinally extending reinforcement beams (5,6), wherein the movable panel is provided with a panel reinforcement member (7) extending transversally between its longitudinal edges at a position between the forward and rearward edges (8,9) of the movable panel, **characterized in that** only in the closed position of the movable panel (3) the opposite ends of its panel reinforcement member (7) are in a force-transmitting engagement with the two reinforcement beams (5,6).

2. Open roof construction according to claim 1, wherein the force-transmitting engagement between the opposite ends of the panel reinforcement member (7) and the two reinforcement beams (5,6) is defined by a clearance fit.

3. Open roof construction according to claim 1 or 2, wherein the force-transmitting engagement between the opposite ends of the panel reinforcement (7) member and the two reinforcement beams (5,6) allows the transmission between those parts of pressure forces as well as tensile forces.

4. Open roof construction according to claim 3, wherein the opposite ends of the panel reinforcement member (7) and the reinforcement beams (5,6) are provided with cooperating parts, one of which comprises an undercut groove (11) and the other of which comprises a mating projecting head (12).

5. Open roof construction according to claim 4, wherein the undercut groove (11) extends substantially in a direction perpendicularly to the movable panel (3).

6. Open roof construction according to claim 4 or 5, wherein the undercut groove (11) is part of the reinforcement beams (5,6), whereas the mating projecting head (12) is part of the opposite ends of the panel reinforcement member (7).

7. Open roof construction according to claim 6, wherein the undercut groove (11) is provided in an extension piece (10) connected to each reinforcement beam (5,6).

8. Open roof construction according to any of the previous claims, wherein the panel reinforcement member (7) is positioned substantially midway the forward and rearward edges (8,9) of the panel (3).

9. Open roof construction according to any of the previous claims, wherein the reinforcement beams (5,6) are part of a frame (4) surrounding the roof opening (2).

## Patentansprüche

1. Öffnungsfähige Dachkonstruktion für ein Fahrzeug, aufweisend eine Dachöffnung (2), die in einem ortsfesten Dachteil (1) vorgesehen ist, und ein bewegbares Paneel (3), welches zwischen einer Schließstellung, in welcher die Dachöffnung geschlossen ist, und einer Öffnungsstellung, in welcher die Dachöffnung geöffnet ist, bewegbar ist, wobei an den beiden gegenüberliegenden Längsrändern der Dachöffnung, die sich in der Längsrichtung des Fahrzeuges erstrecken, das ortsfeste Dachteil jeweilige sich längs erstreckende Verstärkungsträger (5, 6) aufweist, wobei das bewegbare Paneel mit einem Paneelverstärkungselement (7) versehen ist, das sich quer zwischen dessen Längsrändern an einer Stelle zwischen den vorderen und hinteren Rändern (8, 9) des bewegbaren Paneels erstreckt, **dadurch gekennzeichnet, dass** nur in der Schließstellung des bewegbaren Paneels (3) die entgegengesetzten Enden seines Paneelverstärkungselements (7) in einem kraftübertragenden Eingriff mit den beiden Verstärkungsträgern (5, 6) sind.

2. Öffnungsfähige Dachkonstruktion nach Anspruch 1, wobei der kraftübertragende Eingriff zwischen den entgegengesetzten Enden des Paneelverstärkungselements (7) und den beiden Verstärkungsträgern (5, 6) durch eine Spielpassung definiert ist.

3. Öffnungsfähige Dachkonstruktion nach Anspruch 1 oder 2, wobei der kraftübertragende Eingriff zwischen den entgegengesetzten Enden des Paneelverstärkungselements (7) und den beiden Verstärkungsträgern (5, 6) die Übertragung von sowohl Druckkräften als auch Zugkräften zwischen diesen Teilen ermöglicht.

4. Öffnungsfähige Dachkonstruktion nach Anspruch 3, wobei die entgegengesetzten Enden des Paneelverstärkungselements (7) und die Verstärkungsträger (5, 6) mit zusammenwirkenden Teilen versehen sind, wobei das eine davon eine hinterschnittene Nut (11) aufweist und das andere davon einen zusammenpassenden vorstehenden Kopf (12) aufweist.

5. Öffnungsfähige Dachkonstruktion nach Anspruch 4, wobei sich die hinterschnittene Nut (11) im Wesentlichen in einer Richtung senkrecht zu dem bewegbaren Paneel (3) erstreckt.

6. Öffnungsfähige Dachkonstruktion nach Anspruch 4 oder 5, wobei die hinterschnittene Nut (11) ein Teil des Verstärkungsträgers (5, 6) ist, während der zusammenpassende vorstehende Kopf (12) ein Teil der entgegengesetzten Enden des Paneelverstärkungselements (7) ist.

7. Öffnungsfähige Dachkonstruktion nach Anspruch 6, wobei die hinterschnittene Nut (11) in einem Erweiterungsstück (10) vorgesehen ist, das mit dem jeweiligen Verstärkungsträger (5, 6) verbunden ist.

8. Öffnungsfähige Dachkonstruktion nach einem der vorhergehenden Ansprüche, wobei das Paneelverstärkungselement (7) im Wesentlichen in der Mitte der vorderen und hinteren Ränder (8, 9) des Paneels (3) positioniert ist.

9. Öffnungsfähige Dachkonstruktion nach einem der vorhergehenden Ansprüche, wobei die Verstärkungsträger (5, 6) ein Teil eines Rahmens (4) sind, der die Dachöffnung (2) umgibt.

## Revendications

1. Structure de toit ouvrant d'un véhicule, comprenant une ouverture de toit (2) située dans une partie de toit fixe (1) et un panneau mobile (3) qui peut se déplacer entre une position fermée dans laquelle ladite ouverture de toit est fermée et une position ouverte dans laquelle ladite ouverture de toit est ouverte, dans laquelle sur les deux bords longitudinaux opposés de ladite ouverture de toit s'étendant dans la direction longitudinale du véhicule, la partie de toit fixe comprend des poutres de renforcement (5, 6) respectives s'étendant longitudinalement, le panneau mobile étant muni d'un élément de renforcement de panneau (7) s'étendant transversalement entre ses bords longitudinaux dans une position entre les bords avant et arrière (8, 9) du panneau mobile, **caractérisée en ce que**, uniquement dans la position fermée du panneau mobile (3), les extrémités opposées de son élément de renforcement de panneau (7) coopèrent de manière à transmettre une force avec les deux poutres de renforcement (5, 6).

2. Structure de toit ouvrant selon la revendication 1, dans laquelle la coopération permettant de transmettre une force entre les extrémités opposées de l'élément de renforcement de panneau (7) et les deux poutres de renforcement (5, 6) est définie par un ajustement avec jeu.

3. Structure de toit ouvrant selon la revendication 1 ou 2, dans laquelle la coopération permettant de transmettre une force entre les extrémités opposées de l'élément de renforcement de panneau (7) et les deux poutres de renforcement (5, 6) permet la transmission entre ces parties de forces de pression, ainsi que de forces de traction.

4. Structure de toit ouvrant selon la revendication 3, dans laquelle les extrémités opposées de l'élément de renforcement de panneau (7) et les poutres de renforcement (5, 6) sont munies de parties coopérantes, l'un d'entre elles comprenant une gorge (11) et l'autre comprenant une tête appariée en saillie (12).

5. Structure de toit ouvrant selon la revendication 4, dans laquelle la gorge (11) s'étend sensiblement dans une direction perpendiculaire au panneau mobile (3).

6. Structure de toit ouvrant selon la revendication 4 ou 5, dans laquelle la gorge (11) fait partie des poutres de renforcement (5, 6), tandis que la tête appariée en saillie (12) fait partie des extrémités opposées de l'élément de renforcement de panneau (7).

7. Structure de toit ouvrant selon la revendication 6, dans laquelle la gorge (11) est située dans une rallonge (10) reliée à chaque poutre de renforcement (5, 6).

8. Structure de toit ouvrant selon l'une quelconque des revendications précédentes, dans laquelle l'élément de renforcement de panneau (7) est positionné sensiblement à mi-chemin entre les bords avant et arrière (8, 9) du panneau (3).

9. Structure de toit ouvrant selon l'une quelconque des revendications précédentes, dans laquelle les poutres de renforcement (5, 6) font partie d'un cadre (4) entourant l'ouverture de toit (2).
